# EUROPEAN PATENT SPECIFICATION

(11) **EP 3 653 490 B1**
(45) Date of publication and mention of the grant of the patent: **03.01.2024**
(21) Application number: 18382811.0
(22) Date of filing: 16.11.2018
(51) Int. Cl.: B64C 1/06, B64C 1/26, B64C 5/02

(54) **FRAME ASSEMBLY FOR A REAR SECTION OF AN AIRCRAFT AND REAR SECTION OF AN AIRCRAFT COMPRISING SAID FRAME ASSEMBLY**
RAHMENANORDNUNG FÜR EIN HECKTEIL EINES FLUGZEUGS UND HECKTEIL EINES FLUGZEUGS MIT BESAGTER RAHMENANORDNUNG
ENSEMBLE DE CADRE POUR UNE SECTION ARRIÈRE D'UN AÉRONEF ET SECTION ARRIÈRE D'UN AÉRONEF COMPRENANT LEDIT ENSEMBLE DE CADRE

(43) Date of publication of application: 20.05.2020
(73) Proprietor: Airbus Operations, S.L.U., 28906 Getafe (Madrid) (ES)
(72) Inventor: CRUZ-DOMINGUEZ, Francisco, Jose, 28906 GETAFE (Madrid) (ES); COLMENAREJO MATELLANO, Nuria, 28906 GETAFE (Madrid) (ES); VAZQUEZ CASTRO, Jesus Javier, 28906 GETAFE (Madrid) (ES); AREVALO RODRIGUEZ, Elena, 28906 GETAFE (Madrid) (ES); CANAS RIOS, Maria, Almudena, 28906 GETAFE (Madrid) (ES)
(74) Representative: Herrero & Asociados, S.L.

(56) References cited:
- EP-A1- 3 078 586
- WO-A1-2010/070184
- ES-A1- 2 293 809
- KR-B1- 100 843 170
- US-A1- 2016 311 515

## Description

### Technical field of the invention

A first aspect of the present invention relates to a rear section of an aircraft for attaching a vertical tail plane (hereinafter VTP) to at least one frame of the rear section of an aircraft, having application in the technical field of aeronautics, allowing a more effective transfer of loads coming from the VTP to the fuselage.

### Background of the invention

Nowadays, considering any of the different ways used for attaching the VTP to the fuselage of the aircraft, the loads coming from the VTP are directly transferred to the upper part of the tail cone structure, since it is the closest area to the aforementioned VTP. Therefore, the main part of these loads end up in a small area of the skin and frames of the fuselage.

There are two main ways for attaching the VTP to the tail cone structure, by means of shear joints or tension joints.

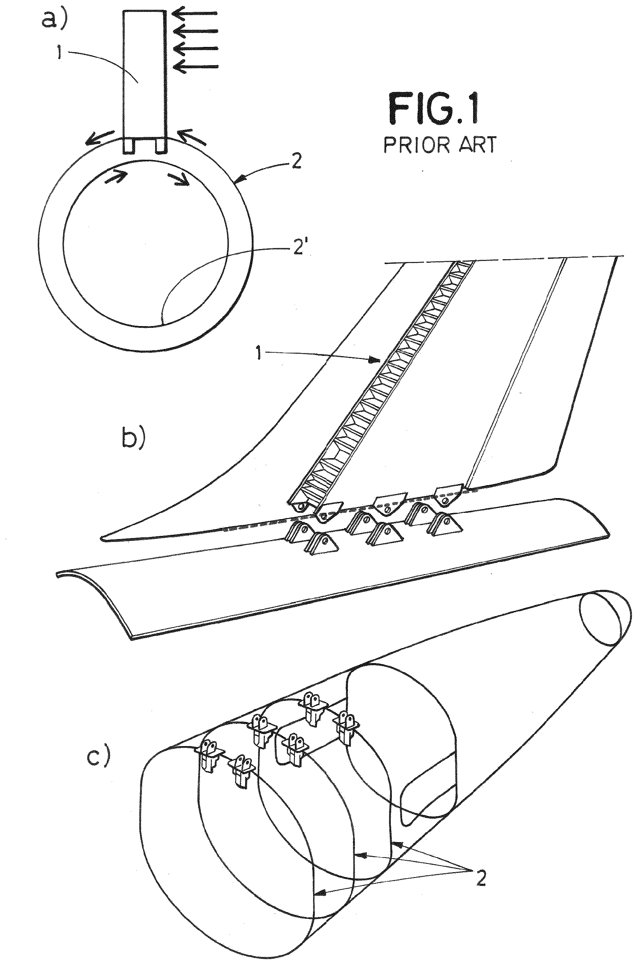

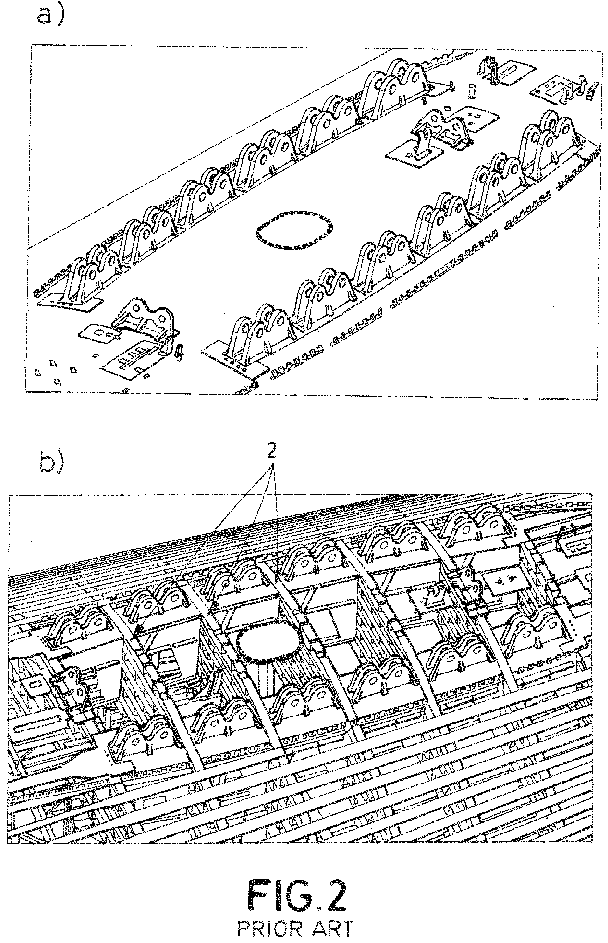

The most common way to transfer the VTP loads is by shear joints made up of a series of fittings, usually two per frame in the fuselage side and another two in the VTP side. Such a solution has been represented in figures 1 and 2. The loads from the VTP are carried through a pin and a lug of every fitting. The load transfer in this case can be appreciated in view a) of figure 1. Thus, in this case, the loads from the VTP are applied on the fuselage as pure moment, i.e. without any other substantive load being applied. Apart from the skin, every fitting on the tail cone side can be attached to a single frame or to a couple of them, as depicted in view b) of figure 2.

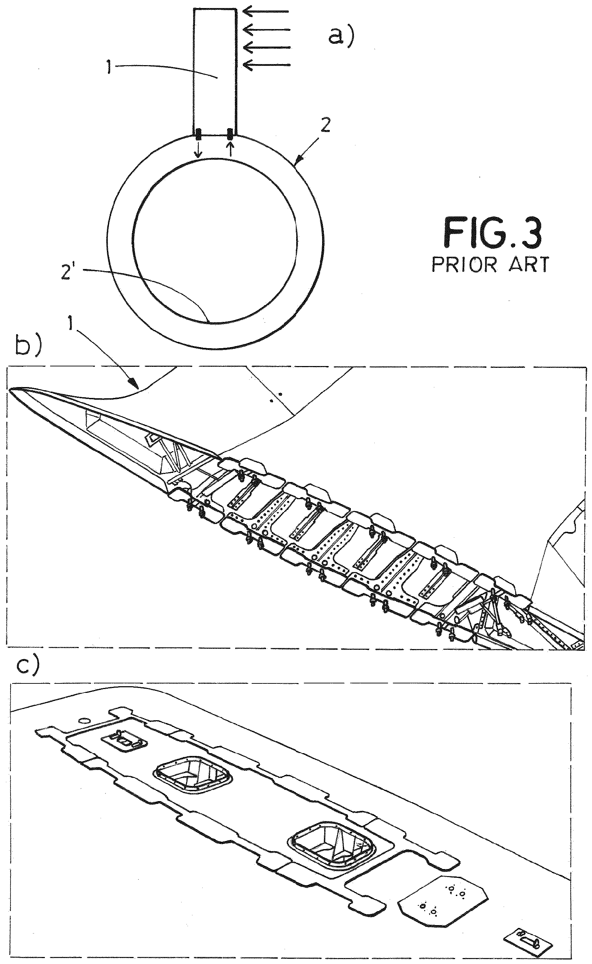

Another possibility is the use of tension joints as shown in figure 3. In this case, instead of carrying the loads from the VTP through the pin and lug of every fitting, the load transmission is carried out by a plurality of tension bolts attached to both sides of the structure involved, i.e. the VTP and the fuselage. On the contrary to the shear joints, there are no moments involved, although the tension joints are under very high tensile forces.

The main drawback, common in both ways, is the high out of plane forces and stress concentrations, in a small area of the upper zone of skin and frames of the fuselage, which leads to very thick and heavy structural components, for instance high loaded frames made of machined or forged metal. In case of hybrid configurations, further thermal loads are present.

US2016311515A1 discloses a method of assembling an aircraft aft portion, in which method the box structure of the engine mounting structure is inserted into the fuselage through a top opening extending from one side of the fuselage to the other across a vertical midplane of the fuselage such that the top opening opens to the top and to the sides of the fuselage.

ES2293809A1 discloses a rear fuselage section for airfreighter, having a vertical tail segment with end frames having reinforcement bars that are connected with nodal points of frames by space bars which are bent in course.

WO2010070184A1 discloses a structure of the load-introduction area in the fuselage rear section of an aircraft, including elements for receiving loads from the horizontal and vertical tailplanes connected to structural elements.

### Description of the invention

The present invention relates to a rear section of an aircraft, as defined by claim 1. The invention overcomes the above mentioned drawbacks.

Further features are cited in the dependent claims.

The rear section of an aircraft according to the present invention comprises a frame intended to be fixed to a vertical tail plane having a plane of symmetry, which normally remains in a vertical position when attached to the fuselage of the aircraft. When the aircraft is in use, the loads supported by the vertical tail plane lead to a variable orientation.

According to the invention, the frame assembly also comprises at least one supporting element, having two ends, wherein each of the ends of the at least one supporting element is attached to the same frame and each of the ends is located at a different side of the plane of symmetry when the vertical tail plane is attached to the rear section.

The operatively connection between the vertical tail plane and the supporting element envisages any connection able to transmission of the loads from the vertical tail plane to the supporting elements, i.e. fittings, bolts, rivets, joints and the like.

Therefore the invention allows to carry or transfer the loads to a lower position and to send them towards both sides of every frame, dividing the whole load in these two lateral areas and increasing the moment arm. This avoids the high out of plane forces and stress concentrations in the upper zone of skin and frames typical of the state of the art configurations, which leads to very thick and heavy structural components. Thus, according to the invention, VTP loads are redistributed in a more efficient way by reacting them at both sides of the tail cone structure, increasing the moment arm and the surface area where these loads can be shared out. Therefore, the invention allows much lighter frames, plus the supporting element, which is bi-clamped to both frame sides.

The advantages yielded by the invention proposed can be summarized as follows:
1. Improvement of the transfer load between VTP and tail cone structure, transforming the important skin out of plane forces into shear forces. This is possible because of the new load reacting areas (lateral areas), where the shear force component is more important than the out of plane one.
2. Improvement of the skin efficiency by increasing the skin working surface (more skin area to react the load).
3. More membrane and less out of plane loads in the upper area of the tail cone leads to a skin less prone to delamination, etc...
4. Due to the out of plane loads reduction, lower thicknesses will be required for the frames, making easier to manufacture these high loaded frames in composite materials (removing metallic parts), so one way assembly processes can be considered and typical thermal loads from hybrid configurations are removed. Furthermore, in the particular case of manufacturing the supporting element in carbon, fatigue problems are overcome and maintenance costs are reduced.
5. Important weight savings (due to skin and frame thickness reduction). When the supporting element is manufactured in carbon thermal loads are avoided and the overall weight is reduced.

### Brief description of the drawings

For a better comprehension of the invention, the following drawings are provided for illustrative and non-limiting purposes, wherein:
Figure 1 schematically shows a solution of the state of the art regarding the VTP attachment in a rear section of an aircraft wherein shear joints are used; view a) shows a transverse section of a frame wherein the load transfer has been represented by arrows, view b) shows a perspective view of the VPT attachment and view c) shows the arrangement of fittings for the attachment of at least one frame in the tail cone structure to the VTP.
Figure 2 shows two perspective views of the arrangement between frames of the shear joints schematically shown in figure 1, in the tail cone structure, wherein view a) includes the skin and view b) does not include the skin and the frames can be appreciated.
Figure 3 shows an alternative solution of the state of the art regarding the VTP attachment in a rear section of an aircraft wherein tension joints are used, wherein view a) shows a transverse section of a frame wherein the load transfer has been represented by arrows, views b) and c) show the arrangement of the tension joints, in the VTP in view b), and in the skin of the tail cone structure in view c).
Figure 4 schematically shows a transverse section of a first embodiment of a frame assembly according to the invention, showing how it works for a pure moment load case, i.e. the loads coming from the VTP are transmitted to the supporting element to the frame in such a way that said frame is under a pure moment load case.
Figure 5 schematically shows a perspective view of a rear end in which the frame assembly according to the first embodiment shown in figure 4 has been installed.
Figure 6 shows a perspective view of the supporting and auxiliary structural elements of the first embodiment shown in figures 4 and 5.
Figure 7 schematically shows a transverse section of a frame wherein a second embodiment of the invention has been represented, in which the supporting element is placed in a top position, so the auxiliary structural elements are reduced to only fittings.
Figure 8 shows a perspective view of the second embodiment shown in figure 7, where longerons stabilizing the supporting element are shown and wherein the supporting element is placed in a top position, so the auxiliary structural elements required are minimized to only fittings.
Figure 9 shows two opposite perspective details of an example, not forming part of the invention, wherein the spars of the VTP are used for its attachment to one frame of the tail cone of the aircraft.

### Preferred embodiments of the invention

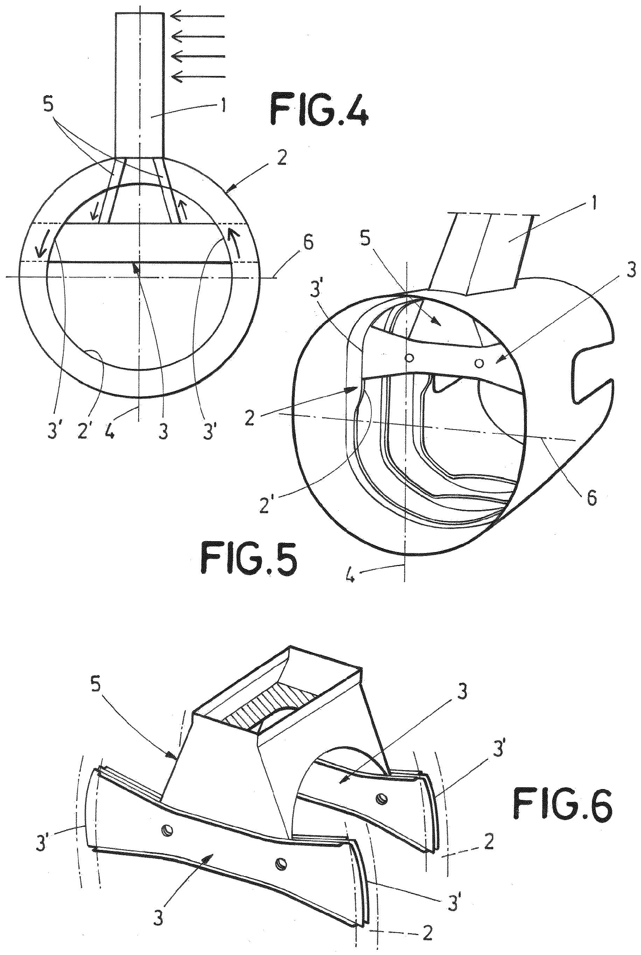

As depicted in figure 4, in a rear section of an aircraft, the vertical tail plane (1) has a plane of symmetry (4) and is operatively connected, e.g. by means of bolts, rivets or metallic fittings, to at least one supporting element (3) acting as a beam and having two ends (3'), wherein each of the ends (3') of the supporting element (3) is attached or clamped to the same frame (2), having also the same plane of symmetry (4) of the VTP. This plane of symmetry (4) is the vertical plane of symmetry, i.e. when the plane of symmetry perpendicular to the ground when the aircraft is on ground.

In turn each of the ends (3') is located at a different side of the plane of symmetry (4) of the vertical tail plane (1) when attached to the fuselage.

Preferably, according to a first embodiment depicted in figures 4 to 6, the supporting element (3) has a flat configuration, i.e. formed by a plate. According to the first embodiment, the ends (3') are greater than the central area in order to better resist the loads in the attachments to the frame (2), as can be appreciated in figure 5.

Each of the ends (3') of the at least one supporting element (3) is attached to an inner side (2') of the same frame (2). As can be appreciated in figures 4 and 5, each attachment between the ends (3') and the frame (2) is located in a half space closer to the VTP (1) defined between the VTP (1) and a medium geometrical plane (6) of the frame (2) perpendicular to the plane of symmetry (4). Given the orientation of the elements forming the structural configuration of the invention, the supporting element (3) acts as a horizontal beam.

The at least one supporting element (3) is perpendicular to the plane of symmetry (4), and the vertical tail plane (1) is operatively connected to said at least one supporting element (3) by means of auxiliary elements (5).

As shown in figures 5 and 6, the auxiliary element (5) has a rectangular upper area configured to be attached to the VPT (1) and two lower supports, each lower support being configured to be attached to adjacent supporting elements (3).

According to this embodiment, the auxiliary element (5) has a rectangular upper area configured to receive the vertical tail plane, and two lower supports, each of them being operatively connected to one supporting element (3). Preferably both supporting elements (3) are adjacent, placed opposite each other. In turn, each of the supporting elements (3) can be formed by two plates and each lower support can engage between the two plates, the connection being made by means of riveting or bolts.

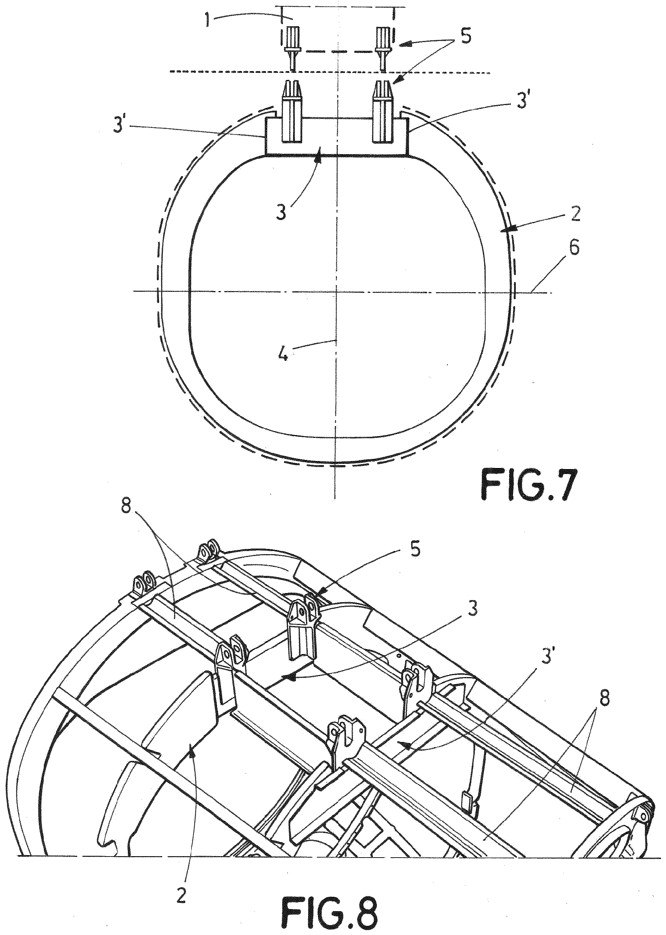

Figures 7 and 8, show a second embodiment, representing the extreme case of the first embodiment wherein the supporting element (3) has been elevated to its maximum position. In the second embodiment, the at least one frame (2) has an upper discontinuity in the closest area to the vertical tail plane (1), wherein the supporting element (3), formed by a rectangular plate, is attached to the frame (2) so as to cover such a discontinuity.

The at least one supporting element (3) is perpendicular to the plane of symmetry (4), and the vertical tail plane (1) is operatively connected to said at least one supporting element (3) by means of auxiliary elements (5) comprising metallic fittings.

According to the second embodiment longitudinal longerons (8) are required, whose purpose is to connect the planes of the frames (2) affected by the introduction of this concept, in order to transfer the longitudinal load and avoid big deformations in X direction. These new parts are necessary due to the absence of contact between the upper skin and the frames. In the first embodiment represented in figures 5 and 6, this job is done by the auxiliary elements (5) connected to the supporting element (3).

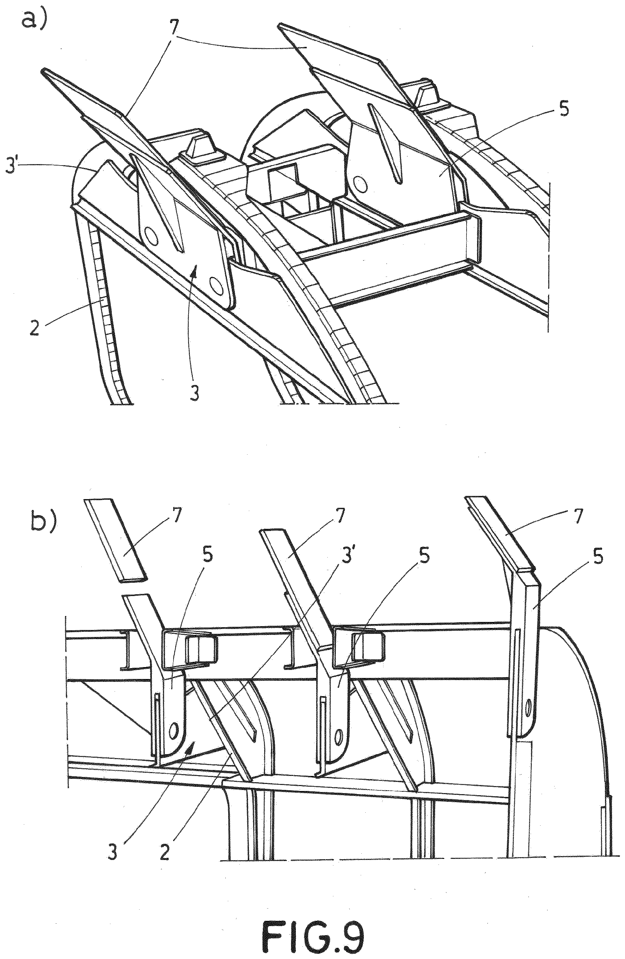

Figure 9 shows an example, not forming part of the invention, where the VTP (not shown) is joined to at least three frames (2) of the tail cone through its spars (7) of the vertical tail plane (1). According to the third embodiment, the auxiliary elements (5) comprise metallic fittings having an inclined surface directly attached to the spars (7) of the vertical tail plane (1). Although in the first and third version of the invention the schemes show a pinned joint, riveted joints can be considered as well for the connection between the fittings or the VTP extension to the supporting element (3).

Additionally, in order to avoid the kink between the supporting element (3) and the VTP spars (7) (third embodiment), the supporting element (3) and frames (2) to which the supporting element (3) is connected can be slanted in order to make coincident frames planes with the VTP spars planes.

In this example, longitudinal longerons (8) are may also be required for the same purpose as the first embodiment.

Thus, the main components of the proposed invention are:
- the supporting element (3), whose main task is to react to the loads and send them to the right and left hand sides of the structure in shear direction;
- auxiliary elements (5), such as metallic fittings or composite panels, in order to transfer the loads from the VTP to the aforementioned supporting element (3);
- and, for the second and the third embodiments, additional longitudinal longerons (8) to connect the planes of the frames (2) affected by the invnetion, in order to transfer the longitudinal load and avoid big deformations in X direction.

The invention impacts in several engineering parameters with respect to current known solutions:
- Weight. The invention allows an overall weight decrease given by frames and skin, although the addition of the supporting elements (horizontal beams) and/or the auxiliary elements (VTP extensions).
- Manufacturing and assembly processes: The highly complex machined High loaded frames (HLFs) are replaced by new simpler composite elements (supporting elements, 'C' or 'Double C' Frames, auxiliary elements ...). Because of Carbon fiber reinforced plastic (CFRP) design, one way assembly processes can be targeted for the whole rear fuselage section, which drives to huge assembly time and therefore recurring cost reduction. Additionally, in the second version of the concept (with VTP fittings) there is no connection between the skin and neither the fittings nor the frame/supporting element in the upper area so the assembly operations in this zone are simplified.
- Materials: All main structure in this concept could be made of CFRP. So no thermal loads and therefore weight decrease.
- Maintainability: No inspections are needed for CFRP elements. Metallic fittings do not have any accessibility problems.

## Claims

1. Rear section for an aircraft, comprising:
a frame assembly comprising at least one frame (2) having a plane of symmetry (4),
a vertical tail plane (1) that is attached to the frame assembly by at least one supporting element (3) having two ends (3'), wherein each one of the ends (3') is attached to said at least one frame (2) at different sides of the plane of symmetry (4),
wherein said at least one supporting element (3) acts as a beam and comprises auxiliary elements (5) for fixing the vertical tail plane (1).

2. Rear section according to claim 1, wherein each one of the ends (3') of the at least one supporting element (3) is attached to a side (2') of the same frame (2).

3. Rear section according to claim 1 or 2, wherein said at least one frame (2) defines a medium geometrical plane (6) perpendicular to the plane of symmetry (4), and the at least one supporting element (3) is placed above said medium geometrical plane (6).

4. Rear section according to anyone of the previous claims, wherein the at least one supporting element (3) is placed in a plane perpendicular to the plane of symmetry (4).

5. Rear section according to anyone of the previous claims, wherein the at least one supporting element (3) has a flat configuration.

6. Rear section according to claim 1, wherein each auxiliary element (5) has an upper area to be attached to a vertical tail plane (1) and two lower supports, each lower support to be attached to adjacent supporting elements (3).

7. Rear section according to claim 1, wherein said at least one frame (2) has an upper discontinuity in the upper area, wherein the at least one supporting element (3) is attached to the frame (2) so as to cover such an upper discontinuity.

8. Rear section according to claim 1, wherein said auxiliary fixing elements (5) comprise fittings.

9. Rear section according to claim 7, comprising a plurality of frames (2) and longitudinal longerons (8) that are placed between adjacent frames (2).

## Patentansprüche

1. Heckabschnitt für ein Luftfahrzeug, mit:
einer Rahmenbaugruppe, die mindestens einen Rahmen (2) aufweist, der eine Symmetrieebene (4) hat,
einer vertikalen Heckebene (1), die an der Rahmenbaugruppe durch mindestens ein Stützelement (3) angebracht ist, das zwei Enden (3') hat, wobei jedes der Enden (3') an dem mindestens einen Rahmen (2) an unterschiedlichen Seiten der Symmetrieebene (4) angebracht ist,
wobei das mindestens eine Stützelement (3) als ein Träger wirkt und Hilfselemente (5) zum Befestigen der vertikalen Heckebene (1) aufweist.

2. Heckabschnitt nach Anspruch 1, wobei jedes der Enden (3') des mindestens einen Stützelements (3) an einer Seite (2') desselben Rahmens (2) angebracht ist.

3. Heckabschnitt nach Anspruch 1 oder 2, wobei der mindestens eine Rahmen (2) eine mittlere geometrische Ebene (6) senkrecht zu der Symmetrieebene (4) definiert und das mindestens eine Stützelement (3) oberhalb der mittleren geometrischen Ebene (6) angeordnet ist.

4. Heckabschnitt nach einem der vorhergehenden Ansprüche, wobei das mindestens eine Stützelement (3) in einer Ebene senkrecht zu der Symmetrieebene (4) angeordnet ist.

5. Heckabschnitt nach einem der vorhergehenden Ansprüche, wobei das mindestens eine Stützelement (3) eine flache Konfiguration aufweist.

6. Heckabschnitt nach Anspruch 1, wobei jedes Hilfselement (5) einen oberen Bereich, der an einem vertikalen Heckflügel (1) anzubringen ist, und zwei untere Stützen aufweist, wobei jede untere Stütze an benachbarten Stützelementen (3) anzubringen ist.

7. Heckabschnitt nach Anspruch 1, wobei der mindestens eine Rahmen (2) eine obere Diskontinuität in dem oberen Bereich aufweist, wobei das mindestens eine Stützelement (3) an dem Rahmen (2) angebracht ist, um eine solche obere Diskontinuität abzudecken.

8. Heckabschnitt nach Anspruch 1, wobei die Hilfsbefestigungselemente (5) Beschläge aufweisen.

9. Heckabschnitt nach Anspruch 7, der eine Vielzahl von Rahmen (2) und längslaufende Längsträger (8) aufweist, die zwischen benachbarten Rahmen (2) platziert sind.

## Revendications

1. Section arrière pour un aéronef, comprenant :
un ensemble de cadre comprenant au moins un cadre (2) présentant un plan de symétrie (4),
un plan de queue vertical (1) qui est fixé à l'ensemble de cadre par au moins un élément de support (3) présentant deux extrémités (3'), dans laquelle chacune des extrémités (3') est fixée audit au moins un cadre (2) sur différents côtés du plan de symétrie (4),
dans laquelle ledit au moins un élément de support (3) agit comme une poutre et comprend des éléments auxiliaires (5) pour fixer le plan de queue vertical (1).

2. Section arrière selon la revendication 1, dans laquelle chacune des extrémités (3') de l'au moins un élément de support (3) est fixée à un côté (2') du même cadre (2).

3. Section arrière selon la revendication 1 ou 2, dans laquelle ledit au moins un cadre (2) définit un plan géométrique moyen (6) perpendiculaire au plan de symétrie (4), et l'au moins un élément de support (3) est placé au-dessus dudit plan géométrique moyen (6).

4. Section arrière selon l'une quelconque des revendications précédentes, dans laquelle l'au moins un élément de support (3) est placé dans un plan perpendiculaire au plan de symétrie (4).

5. Section arrière selon l'une quelconque des revendications précédentes, dans laquelle l'au moins un élément de support (3) présente une configuration plate.

6. Section arrière selon la revendication 1, dans laquelle chaque élément auxiliaire (5) présente une zone supérieure à fixer à un plan de queue vertical (1) et deux supports inférieurs, chaque support inférieur devant être fixé aux éléments de support (3) adjacents.

7. Section arrière selon la revendication 1, dans laquelle ledit au moins un cadre (2) présente une discontinuité supérieure dans la zone supérieure, dans laquelle l'au moins un élément de support (3) est fixé au cadre (2) de sorte à couvrir une telle discontinuité supérieure.

8. Section arrière selon la revendication 1, dans laquelle lesdits éléments de fixation auxiliaires (5) comprennent des raccords.

9. Section arrière selon la revendication 7, comprenant une pluralité de cadres (2) et de longerons longitudinaux (8) qui sont placés entre des cadres adjacents (2).
